# EUROPÄISCHE PATENTSCHRIFT

(11) **EP 1 963 784 B1**
(45) Veröffentlichungstag und Bekanntmachung des Hinweises auf die Patenterteilung: **26.08.2015**
(21) Anmeldenummer: 06841419.2
(22) Anmeldetag: 18.12.2006
(51) Int. Cl.: G01D 3/02

(54) **ÜBERWACHUNGSSYSTEM, INSBESONDERE SCHWINGUNGSÜBERWACHUNGSSYSTEM, UND VERFAHREN ZUM BETRIEB EINES SOLCHEN SYSTEMS**
MONITORING SYSTEM, ESPECIALLY VIBRATION MONITORING SYSTEM, AND METHOD FOR OPERATING SAID SYSTEM
SYSTÈME DE SURVEILLANCE, EN PARTICULIER SYSTÈME DE SURVEILLANCE DE VIBRATIONS, ET PROCÉDÉ DE FONCTIONNEMENT D'UN TEL SYSTÈME

(30) Priorität: 19.12.2005 DE 102005060720
(43) Veröffentlichungstag der Anmeldung: 03.09.2008
(73) Patentinhaber: Siemens Aktiengesellschaft, 80333 München (DE)
(72) Erfinder: BORGER, Thomas, 64846 Klein-Zimmern (DE); KREB, Walter, 76848 Schwanheim (DE); LEHMANN, Ulrich, 76744 Wörth (DE); SCHWAB, Robert, 76187 Karlsruhe (DE); SIEBERLING, Hans-Günther, 65719 Hofheim (DE); TROCKEL, Raimund, 64367 Mühltal (DE)
(86) Internationale Anmeldenummer: PCT/EP2006/069825
(87) Internationale Veröffentlichungsnummer: WO 2007/071644

(56) Entgegenhaltungen:
- WO-A-97/04463

## Beschreibung

Die Erfindung betrifft ein Überwachungssystem, insbesondere ein Schwingungsüberwachungssystem, sowie ein Verfahren zum Betrieb eines solchen Systems. Überwachungssysteme sind allgemein bekannt. Sie umfassen als Sensorik zumindest einen Sensor, wobei der oder jeder Sensor am überwachten System Daten aufnimmt, die eine Aussage über den Zustand des Systems erlauben. Zur Reduzierung des Verdrahtungsaufwands in komplexen Systemen hat sich die Verwendung von Feldgeräten, an die eine Mehrzahl von Sensoren sowie sonstige Prozessperipherie anschließbar ist, durchgesetzt. Solche Feldgeräte werden im Folgenden unter dem Begriff Vorverarbeitungseinheit zusammengefasst.

Aus der WO 97/04463 ist ein Reaktorschutzsystem bekannt, das vier redundante Sensoren aufweist, deren gemessenen Daten von vier unabhängigen Teilelektroniken eingelesen und digitalisiert werden. Jede der vier Teilelektroniken erhält Daten von je einem der vier Sensoren, digitalisiert sie und übermittelt die erhaltenen Informationen an die anderen drei Teilelektroniken. Eine Hardware-Logikschaltung ist mit den Ausgängen der vier Teilelektroniken gekoppelt. Um die Nutzbarkeit des Systems zu erhöhen und falsche Sicherheitsabschaltungen des Reaktors zu verringern, werden zwei Stufen des Votings zur Erforderlichkeit eines Abschaltens angewendet. Jede Teilelektronik wertet die Sensordaten der anderen drei Teilelektroniken aus, während die verarbeiteten Daten des eigenen Sensors in Reserve gehalten werden. Wenn mindestens zwei der drei ausgewerteten Sensordaten einen vorbestimmten Wert überschreiten, zeigt die jeweilige Teilelektronik den Zustand zum Abschalten an. Jede Teilelektronik führt demnach ein 2/3-Voting für das Abschalten des Reaktors durch. Fehlende oder ungültige Daten von einem der Sensoren werden in jeder Teilelektronik, die die Sensordaten auswerten soll, durch die Daten des eigenen Sensors ersetzt. Die Hardware-Logikschaltung führt ein 2/4-Voting durch, d. h., von mindestens zwei der vier Teilelektroniken muss der Zustand zum Abschalten angezeigt werden. Fällt eine der Teilelektroniken aus, wird von ihr ein Signal an die Hardware-Logik zum Abschalten des Reaktors gesendet.

Die Erfindung betrifft insbesondere ein Schwingungsüberwachungssystem, also ein System, das außergewöhnliche Schwingungen eines technischen Systems, wie z. B. eine Turbine, d. h. Schwingungen mit außergewöhnlicher Amplitude und/oder Frequenz erkennt, und zwar insbesondere fehlersicher erkennt, und gegebenenfalls in Ansehung solcher erkannter Situationen auch Maßnahmen, insbesondere die Abschaltung des Gesamtsystems oder relevanter Teilsysteme, dies gegebenenfalls auch fehlersicher, veranlasst. Dazu ist bei einem Überwachungssystem der eingangs genannten Art mit einer Mehrzahl von Sensoren, darunter mindestens einer in redundanter Ausführung, mit mindestens einer Vorverarbeitungseinheit und mindestens einer Verarbeitungseinheit vorgesehen, dass jeder Sensor redundant an mindestens eine Vorverarbeitungseinheit und jede Vorverarbeitungseinheit redundant an mindestens eine Verarbeitungseinheit anschließbar ist. Ein Sensor, gegebenenfalls auch jeder Sensor, kann also gemäß der Erfindung einer oder zwei Vorverarbeitungseinheiten zugänglich gemacht werden. Dies wird für jeden Sensor einzeln ausgewählt, insbesondere durch entsprechenden Anschluss, also durch Nutzung der redundanten Anschließbarkeit. Des Weiteren ist auch jede Vorverarbeitungseinheit derart ausgeführt, dass sie mit einer oder zwei Verarbeitungseinheiten, z. B. einer so genannten Zentraleinheit eines Steuerungssystems (Zentralstation), in Verbindung stehen kann.

Der Vorteil der Erfindung besteht darin, dass ohne den Einsatz spezieller Hardware das Maß der Verfügbarkeit des Überwachungssystems über einen weiten Bereich variiert werden kann. Im Vollausbau ist das Überwachungssystem sogar ein-Fehler-tolerant, und zwar in dem Sinne, dass ein Einfachfehler im Überwachungssystem keinerlei Informationsverlust nach sich zieht. Dies gilt sogar dann noch, wenn je ein Einfachfehler in den Vorverarbeitungseinheiten und/oder den Verarbeitungseinheiten auftritt.

Die abhängigen Ansprüche sind auf bevorzugte Ausführungsformen der vorliegenden Erfindung gerichtet.

Bevorzugt weist jeder Sensor Kontakte zum redundanten Anschluss an zwei Vorverarbeitungseinheiten auf. Auf diese Weise kann für jeden Sensor individuell festgelegt werden, ob das von diesem Sensor gelieferte Datum zur redundanten Verarbeitung durch eine nachfolgende Vorverarbeitungseinheit vorgesehen ist.

Weiter bevorzugt ist vorgesehen, dass das Überwachungssystem in einer konkreten Ausführung, also über die oben formulierte bloße Möglichkeit hinaus, tatsächlich mindestens zwei Vorverarbeitungseinheiten, also eine Vorverarbeitungseinheit und eine redundante Vorverarbeitungseinheit aufweist. Dabei ist mindestens ein Sensor gleichzeitig an eine Vorverarbeitungseinheit sowie eine redundante Vorverarbeitungseinheit angeschlossen. Neben der mindestens einen Vorverarbeitungseinheit und ihrem jeweiligen redundanten Pendant kann das Überwachungssystem weitere Vorverarbeitungseinheiten umfassen, die nicht notwendigerweise in die Redundanz einbezogen sind. Wenn jede Vorverarbeitungseinheit Schnittstellen zum redundanten Anschluss an zwei Verarbeitungseinheiten aufweist, kann auch der Kommunikationspfad von jeder Vorverarbeitungseinheit zur jeweiligen Verarbeitungseinheit nach Maßgabe der jeweiligen Randbedingungen aus dem technischen Prozess redundant oder nichtredundant ausgeführt werden. Die Entscheidung in dieser Hinsicht trifft der Anlagenplaner oder gegebenenfalls auch der Inbetriebnehmer.

In einer weiteren bevorzugten Ausgestaltung umfasst das Überwachungssystem auch in Bezug auf die Verarbeitungseinheiten in einer konkreten Ausgestaltung, abweichend von der weiter oben formulierten bloßen Möglichkeit, tatsächlich mindestens eine Verarbeitungseinheit und mindestens eine dazu redundante Verarbeitungseinheit. Weitere Verarbeitungseinheiten können vorgesehen sein, ohne in die Redundanz einbezogen zu sein. Bei einer solchen Ausführungsform des Überwachungssystems ist weiter vorteilhaft vorgesehen, dass mindestens eine Vorverarbeitungseinheit gleichzeitig an eine Verarbeitungseinheit und eine dazu redundante Verarbeitungseinheit angeschlossen ist. Besonders bevorzugt ist vorgesehen, dass bei zumindest einer Vorverarbeitungseinheit und einer dazu redundanten Vorverarbeitungseinheit die Vorverarbeitungseinheit gleichzeitig an eine Verarbeitungseinheit sowie eine dazu redundante Verarbeitungseinheit und ebenfalls die redundante Vorverarbeitungseinheit an eine oder die Verarbeitungseinheit und gleichzeitig an eine dazu redundante Verarbeitungseinheit angeschlossen ist. Damit ergibt sich eine Redundanz sowohl auf der Ebene der Vorverarbeitungseinheiten, auf der Ebene der Verarbeitungseinheiten wie auch auf der Ebene der zwischen beiden Ebenen bestehenden Kommunikationsverbindungen.

Zum Betrieb des erfindungsgemäßen Überwachungssystems ist ein von der Erfindung umfasstes Verfahren vorgesehen, bei dem Sensordaten von dem oder jedem Sensor an die oder jede jeweils angeschlossene Vorverarbeitungseinheit und Terminaldaten von der oder jeder Vorverarbeitungseinheit an die oder jede jeweils angeschlossene Verarbeitungseinheit übermittelt werden. Sowohl der Ausdruck "Vorverarbeitungseinheit" als auch der Ausdruck "Verarbeitungseinheit" umfasst die jeweilige Einheit selbst und ein gegebenenfalls vorhandenes redundantes Pendant. Diese Verwendung der Begriffe wird im Folgenden fortgeführt.

Weiter bevorzugt ist vorgesehen, dass beim Empfang von redundanten Sensordaten jede Vorverarbeitungseinheit ein voting durchführt. Wenn also eine Vorverarbeitungseinheit von redundanten Sensoren entsprechend redundante Sensordaten empfängt, die, ordnungsgemäße Funktion der Sensoren und der jeweiligen Übertragungsstrecke vorausgesetzt, grundsätzlich gleiche oder zumindest im Wesentlichen gleiche Werte repräsentieren sollten, kann im Falle von Abweichungen in einer Gruppe solcher Daten mittels eines votings die Weiterleitung derjenigen Daten oder desjenigen Datums ausgelöst werden, die bzw. das die größte Plausibilität beinhaltet bzw. beinhalten. Voting als solches ist an sich bekannt und wird hier nicht weiter erläutert.

Ein ähnlicher Verarbeitungsschritt kann zusätzlich oder alternativ auch auf der Ebene der Verarbeitungseinheit beim Empfang von redundanten Terminaldaten durchgeführt werden. Wenn nach Übermittlung der Sensordaten von dem oder jedem Sensor zur Vorverarbeitungseinheit und von dort nach einer Weiterleitung der gegebenenfalls transformierten, z. B. analog-digital-gewandelten, Sensordaten an eine oder mehrere Verarbeitungseinheiten in Form von Terminaldaten die eigentlichen Prozessdaten damit schließlich auf der Ebene der Verarbeitungseinheit vorliegen, kann bei einem Überwachungssystem mit einer Verarbeitungseinheit und einer redundanten Verarbeitungseinheit vorgesehen sein, dass in Ansehung der Sensordaten, also der eigentlich zugrunde liegenden Daten, eine Aktion durch die Verarbeitungseinheit oder die redundante Verarbeitungseinheit nur erfolgt, wenn Verarbeitungseinheit und redundante Verarbeitungseinheit gleiche Terminaldaten, also die aus den Sensordaten hervorgehenden Daten, oder nach einem voting in Ansehung der Terminaldaten insoweit gleiche Daten oder im Wesentlichen gleiche Daten vorliegen haben. Bei einer Überwachung z. B. einer Turbine auf außergewöhnliche Schwingungen erfolgt dann eine Behandlung einer Ausnahmesituation, also z. B. eine Behandlung außergewöhnlicher Frequenzen oder Amplituden insbesondere im Wege des Abschaltens der Turbine oder einzelner Aggregate dieser Turbine dann und nur dann, wenn die mutmaßlich außergewöhnlichen Schwingungsdaten je nach vorliegender Redundanz, also je nach Ausbäugrad des Überwachungssystems, auf der Ebene der Verarbeitungseinheit in abgesicherter Form vorliegen, d. h. wenn Daten, die auf außergewöhnliche Schwingungen hindeuten, zumindest von zwei redundanten Sensoren vorliegen oder, wenn keine redundanten Sensoren vorhanden sind, eine Verarbeitung der Sensordaten durch zumindest zwei redundante Vorverarbeitungseinheiten stattgefunden hat oder, wenn keine redundanten Vorverarbeitungseinheiten vorliegen, eine Verarbeitung der Terminaldaten durch zumindest zwei Verarbeitungseinheiten stattgefunden hat. Neben der Möglichkeit, auf Redundanz in den einzelnen Ebenen zu verzichten, besteht natürlich auch die Möglichkeit, jede Ebene redundant auszuführen und damit insgesamt die Verlässlichkeit des Überwachungssystems zu erhöhen. So kann entsprechend eine Behandlung einer Ausnahmesituation auch dann vorgesehen sein, wenn redundante Sensordaten, die auf eine außergewöhnliche Schwingung an der Turbine hindeuten, vorliegen, die durch redundante Vorverarbeitungseinheiten verarbeitet und redundante Verarbeitungseinheiten ausgewertet werden.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnungen offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die z. B. durch Kombination oder Abwandlung von einzelnen in Verbindung mit den im allgemeinen oder speziellen Beschreibungsteil beschriebenen sowie in den Ansprüchen und/oder den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

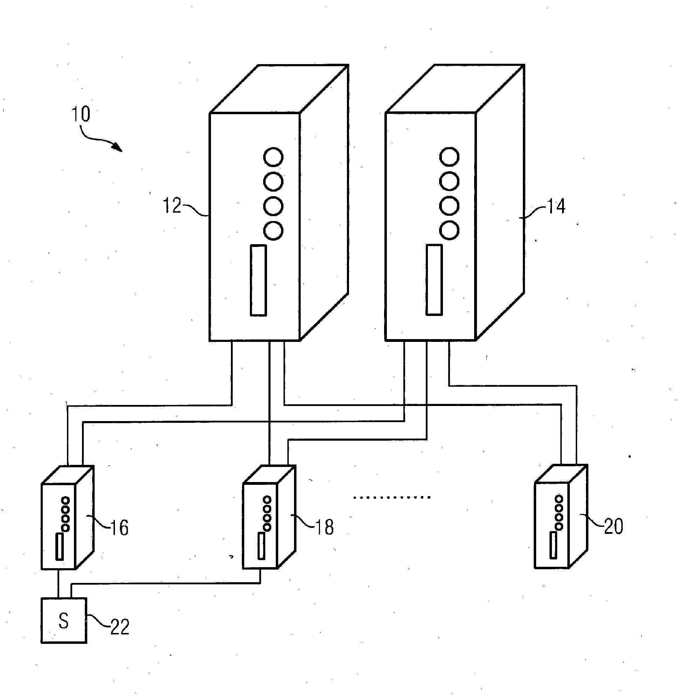

Nachfolgend wird ein Ausführungsbeispiel der Erfindung anhand der Zeichnung näher erläutert.

Darin zeigt die einzige Figur ein schematisch vereinfachtes Blockschaltbild eines Überwachungssystems gemäß der Erfindung.

Die Figur zeigt ein schematisch vereinfachtes Blockschaltbild eines Überwachungssystems 10 gemäß der Erfindung. Das Überwachungssystem 10 umfasst in der dargestellten Ausführungsform eine erste und zweite Verarbeitungseinheit 12, 14, wobei die zweite Verarbeitungseinheit 14 als redundante Verarbeitungseinheit zu der ersten Verarbeitungseinheit 12 vorgesehen ist. Damit ist auf der Ebene der Verarbeitungseinheiten eine Redundanz gegeben. Jede Verarbeitungseinheit 12, 14 ist kommunikativ, z. B. über einen Bus, insbesondere einen so genannten Feldbus, z. B. den PROFIBUS, mit einer oder mehreren Vorverarbeitungseinheiten 16, 18, 20 verbunden. Aus einer Vielzahl theoretisch möglicher Vorverarbeitungseinheiten 16, 18, 20 sind in der Figur nur eine erste, eine zweite und eine dritte Vorverarbeitungseinheit 16, 18, 20 dargestellt. Jede Vorverarbeitungseinheit 16, 18, 20 ist dabei in redundanter Weise sowohl an die erste Verarbeitungseinheit 12 als auch an die dazu redundante zweite Verarbeitungseinheit 14 angeschlossen. An jede Vorverarbeitungseinheit 16, 18, 20 kann ein oder mehrere Sensoren 22 angeschlossen sein. Jeder Sensor 22 ist zur Aufnahme von Signalen aus einem nicht dargestellten externen technischen Prozess, bei Verwendung des Überwachungssystems zur Schwingungsüberwachung z. B. zur Aufnahme von Schwingungsdaten eines technischen Prozesses, wie z. B. einer Gasturbine, vorgesehen. In der Darstellung in der Figur ist exemplarisch nur ein Sensor 22 dargestellt. Dieser ist redundant an die erste Vorverarbeitungseinheit 16 und die zweite Vorverarbeitungseinheit 18 angeschlossen. Die zweite Vorverarbeitungseinheit 18 übernimmt damit in Bezug auf eine Verarbeitung von vom Sensor 22 empfangenen Sensordaten eine Funktion als in Bezug auf die erste Vorverarbeitungseinheit 16 redundante Vorverarbeitungseinheit. Ein nicht dargestellter weiterer Sensor kann in entsprechender Art und Weise z. B. redundant an die erste Vorverarbeitungseinheit 16 und die dritte Vorverarbeitungseinheit 20 angeschlossen sein, wobei dann die dritte Vorverarbeitungseinheit 20 die Funktion als redundante Vorverarbeitungseinheit zur ersten Vorverarbeitungseinheit 16 übernimmt.

Insgesamt ergibt sich mit der Erfindung ein Überwachungssystem, das eine oder mehrere Vorverarbeitungseinheiten und eine oder mehrere Verarbeitungseinheiten (Zentraleinheiten) umfasst. Ohne den Einsatz spezieller Hardware ist dabei die Verfügbarkeit des Systems über einen weiten Bereich variierbar. Das Überwachungssystem ist im Vollausbau, d. h. bei ausreichender Redundanz auf jeder Ebene, also auf der Ebene der Sensoren 22, der Ebene der Vorverarbeitungseinheiten 16 bis 20 und der Ebene der Verarbeitungseinheiten 12, 14, ein-Fehler-tolerant, in dem Sinne, dass ein Einfachfehler im Überwachungssystem keinerlei Informationsverlust nach sich zieht. Dies gilt sogar dann noch, wenn ein Einfachfehler in einer Vorverarbeitungseinheit 16 bis 20 und einer Verarbeitungseinheit 12, 14 auftritt. Das Verfahren zum Betrieb des Überwachungssystems kann durch ein geeignetes voting ergänzt werden, derart, dass auf den Ausfall von Informationen in einer Art und Weise reagiert wird, die die Gesamtfunktion des Systems sicherstellt. So kann auf den Ausfall eines Sensors 22, der nicht redundant aufgebaut ist, so reagiert werden, dass eine dem voting zugrunde liegende Votinglogik von 2v2 (zwei von zwei) auf 1v1 (eins von eins) automatisch umgeschaltet wird. Man spricht insoweit von einer verfahrenstechnischen Redundanz.

Insgesamt lässt sich die vorliegende Erfindung damit kurz wie folgt darstellen: Es wird ein Überwachungssystem, insbesondere eine Einrichtung zur Schwingungsüberwachung von Turbinen, mit feinstufig einstellbarer Verfügbarkeit von auf der einen Seite "rein einkanalig" bis auf der anderen Seite "ein-Fehler-tolerant" und "beschränkt zwei-Fehler-tolerant" ohne die Notwendigkeit weiterer spezieller Hardwarekomponenten angegeben.

## Patentansprüche

1. Überwachungssystem, insbesondere Schwingungsüberwachungssystem, mit einer Mehrzahl von Sensoren (22), darunter mindestens einer in redundanter Ausführung,
mindestens einer Vorverarbeitungseinheit (16),
mindestens einer redundanten Vorverarbeitungseinheit (16, 18, 20) und
mindestens einer Verarbeitungseinheit (12),
wobei jede Vorverarbeitungseinheit (16) redundant an mindestens eine Verarbeitungseinheit (12) anschließbar ist, **dadurch gekennzeichnet,**
**dass** jeder Sensor (22) Kontakte zum redundanten Anschluss an zwei Vorverarbeitungseinheiten (16, 18, 20) aufweist und dass mindestens ein Sensor (22) gleichzeitig an eine Vorverarbeitungseinheit (16 bis 20) und eine redundante Vorverarbeitungseinheit (16 bis 20) angeschlossen ist.

2. Überwachungssystem nach Anspruch 1, wobei jede Vorverarbeitungseinheit (16 bis 20) Schnittstellen zum redundanten Anschluss an zwei Verarbeitungseinheiten (12, 14) aufweist.

3. Überwachungssystem nach Anspruch 2, mit zusätzlich mindestens einer redundanten Verarbeitungseinheit (12, 14), wobei mindestens eine Vorverarbeitungseinheit (16 bis 20) gleichzeitig an eine Verarbeitungseinheit (12, 14) und eine redundante Verarbeitungseinheit (12, 14) angeschlossen ist.

4. Verfahren zum Betrieb eines Überwachungssystems nach einem oder mehreren der vorangehenden Ansprüche, wobei Sensordaten von dem oder jedem Sensor (22) an jede jeweils angeschlossene Vorverarbeitungseinheit (16 bis 20) übermittelt werden und wobei Terminaldaten von jeder Vorverarbeitungseinheit (16 bis 20) an jede jeweils angeschlossene Verarbeitungseinheit (12, 14) übermittelt werden.

5. Verfahren nach Anspruch 4, wobei jede Vorverarbeitungseinheit (16 bis 20) beim Empfang von redundanten Sensordaten ein voting durchführt.

6. Verfahren nach Anspruch 4 oder 5, wobei jede Verarbeitungseinheit (12, 14) beim Empfang von redundanten Terminaldaten ein voting durchführt.

7. Verfahren nach einem der Ansprüche 4 bis 6, wobei bei einem Überwachungssystem mit einer Verarbeitungseinheit (12, 14) und einer redundanten Verarbeitungseinheit (12, 14) in Ansehung der Sensordaten eine Aktion durch die Verarbeitungseinheit (12, 14) oder die redundante Verarbeitungseinheit (12, 14) nur erfolgt, wenn Verarbeitungseinheit (12, 14) und redundante Verarbeitungseinheit (12, 14) gleiche Terminaldaten oder nach einem voting in Ansehung der Terminaldaten insoweit gleiche Daten vorliegen haben.

8. Verwendung des Überwachungssystems nach einem oder mehreren der vorangehenden Ansprüche 1 bis 3 oder des Überwachungsverfahrens nach einem oder mehreren der Ansprüche 4 bis 7 zur Schwingungsüberwachung.

9. Verwendung gemäß Anspruch 8, wobei zumindest einzelne Sensoren (22) als Schwingungssensoren, insbesondere piezoelektrische Schwingungssensoren, ausgeführt sind.

## Claims

1. Monitoring system, especially a vibration monitoring system, with a plurality of sensors (22), including at least one in a redundant configuration,
at least one preprocessing unit (16),
at least one redundant preprocessing unit (16, 18, 20) and
at least one processing unit (12),
with each preprocessing unit (16) able to be connected redundantly to at least one processing unit (12).
**characterised in that**
each sensor (22) has contacts for redundant connection to two preprocessing units (16, 18, 20) and
at least one sensor (22) is simultaneously connected to a preprocessing unit (16 to 20) and to a redundant preprocessing unit (16 to 20).

2. Monitoring system according to claim 1, with each preprocessing unit (16 to 20) having interfaces for redundant connection to two processing units (12, 14).

3. Monitoring system according to claim 2, with additionally at least one redundant processing unit (12, 14), with at least one preprocessing unit (16 to 20) being connected simultaneously to a processing unit (12, 14) and a redundant processing unit (12, 14).

4. Method for operation of a monitoring system according to one or more of the preceding claims, with sensor data being transmitted from the sensor or from each sensor (22) to each respective connected preprocessing unit (16 to 20) and with terminal data being transmitted from each preprocessing unit (16 to 20) to each respective connected processing unit (12, 14).

5. Method according to claim 4, with each preprocessing unit (16 to 20) carrying out voting on receipt of redundant sensor data.

6. Method according to claim 4 or 5, with each processing unit (12, 14) carrying out voting on receipt of redundant terminal data.

7. Method according to one of the claims 4 to 6 with, in a monitoring system with one processing unit (12, 14) and one redundant processing unit (12, 14) in conjunction with the sensor data, an action only being carried out by the processing unit (12, 14) or the redundant processing unit (12, 14), if processing unit (12, 14) and redundant processing unit (12, 14) have the same terminal data available or after voting in conjunction with the terminal data have largely the same data available.

8. Use of the monitoring system according to one or more of the previous claims 1 to 3 or of the monitoring method according to one or more of claims 4 to 7 for vibration monitoring.

9. Use according to claim 8, with at least individual sensors (22) being embodied as vibration sensors, especially piezoelectric vibration sensors.

## Revendications

1. Système de contrôle, notamment système de contrôle de vibrations, comprenant une multiplicité de capteurs (22),
parmi lesquels au moins l'un en une réalisation redondante,
au moins une unité (16) de prétraitement,
au moins une unité (16, 18, 20) de prétraitement redondante et
au moins une unité (12) de traitement,
dans lequel chaque unité (16) de prétraitement peut être connectée de manière redondante à au moins une unité (12) de traitement,
**caractérisé**
**en ce que** chaque capteur (22) a des contacts de connexion redondante à deux unités (16, 18, 20) de prétraitement et
**en ce qu'**au moins un capteur (22) est connecté en même temps à une unité (16 à 20) de prétraitement et à une unité (16 à 20) de prétraitement redondante.

2. Système de contrôle suivant la revendication 1, dans lequel chaque unité (16 à 20) de prétraitement a des interfaces de connexion redondante à deux unités (12, 14) de traitement.

3. Système de contrôle suivant la revendication 2, comprenant, en outre, au moins une unité (12, 14) de traitement redondante, dans lequel au moins une unité (16 à 20) de prétraitement est connectée en même temps à une unité (12, 14) de traitement et à une unité (12, 14) de traitement redondante.

4. Procédé pour faire fonctionner un système de contrôle suivant l'une ou plusieurs des revendications précédentes, dans lequel des données de capteur sont transmises du ou de chaque capteur (22) à chaque unité (16 à 20) de prétraitement respectivement connectée et dans lequel des données terminales sont transmises de chaque unité (16 à 20) de prétraitement à chaque unité (12, 14) de traitement connectée respectivement.

5. Procédé suivant la revendication 4, dans lequel chaque unité (16 à 20) de prétraitement effectue, lors de la réception de données de capteur redondantes, un choix du meilleur signal reçu.

6. Procédé suivant la revendication 4 ou 5, dans lequel chaque unité (12, 14) de traitement effectue, à la réception de données terminales redondantes, un choix du meilleur signal reçu.

7. Procédé suivant l'une des revendications 4 à 6, dans lequel, pour un système de contrôle ayant une unité (12, 14) de traitement et une unité (12, 14) de traitement redondante, on effectue, en considération des données de capteur, une action par l'unité (12, 14) de traitement ou par l'unité (12, 14) de traitement redondante, seulement si l'unité (12, 14) de traitement et l'unité (12, 14) de traitement redondante ont de mêmes données terminales ou de mêmes données, en considération des données terminales, après un choix du meilleur signal reçu.

8. Utilisation du système de contrôle suivant l'une ou plusieurs des revendications précédentes 1 à 3 ou du procédé de contrôle suivant l'une ou plusieurs des revendications 4 à 7, pour le contrôle des vibrations.

9. Utilisation suivant la revendication 8, dans laquelle au moins certains capteurs (22) sont réalisés sous la forme de capteurs de vibrations, notamment sous la forme de capteurs de vibrations piézoélectriques.
